Europäisches Patentamt

European Patent Office

Office européen des brevets

(11) Veröffentlichungsnummer: **0 087 641**
**B1**

(12) **EUROPÄISCHE PATENTSCHRIFT**

(45) Veröffentlichungstag der Patentschrift:
27.08.86

(21) Anmeldenummer: 83101292.7

(22) Anmeldetag: 10.02.83

(51) Int. Cl.⁴: **G 01 N 1/20**

(54) Probenentnahmevorrichtung für ein in einem Behälter enthaltenes Schüttgut-Haufwerk.

(30) Priorität: 22.02.82 DE 3206323

(43) Veröffentlichungstag der Anmeldung:
07.09.83 Patentblatt 83/36

(45) Bekanntmachung des Hinweises auf die Patenterteilung:
27.08.86 Patentblatt 86/35

(84) Benannte Vertragsstaaten:
CH FR IT LI SE

(56) Entgegenhaltungen:
FR - A - 2 097 415
US - A - 2 875 615
US - A - 3 206 981

(73) Patentinhaber: KRAFTWERK UNION AKTIENGESELLSCHAFT, Wiesenstrasse 35, D-4330 Mülheim (Ruhr) (DE)

(72) Erfinder: Mathewes, Wolfgang, Nelkenweg 75, D-6300 Giessen (DE)

(74) Vertreter: Mehl, Ernst, Dipl.-Ing. et al, Postfach 22 01 76, D-8000 München 22 (DE)

# Beschreibung

Die Erfindung bezieht sich auf eine Probenentnahmevorrichtung für ein in einem Behälter enthaltenes Schüttgut-Haufwerk, gemäss Oberbegriff des Anspruchs 1.

Derartige Schüttgut-Haufwerke kommen in der Technik in vielfältiger Form vor; es kann sich z.B. um Futtermittel-, Dünger- oder Getreidesilos handeln, wo körnige Substanzen entsprechende Behälter zumindest diskontinuierlich von oben nach unten durchströmen, wie sie aus der US-A-3 472 079, der US-A-3 279 259 und der DE-A-219 819 hervorgehen. Es kann sich bei den Schüttgut-Haufwerken auch um Ionenaustauscher handeln, bei denen die ionenaustauschende Masse in einem Behälter von oben nach unten, ebenfalls zumindest diskontinuierlich, strömt und – vorzugsweise im Gegenstrom – die zu konditionierende Flüssigkeit bzw. das aufzubereitende Wasser das Haufwerk von unten nach oben durchströmt. Von besonderer Bedeutung sind Probenentnahmevorrichtungen für Schüttgut-Filter, und hier insbesondere für die sogenannten Aktivkohle-Filter in Kernkraftwerken. Hierbei wird das Haufwerk von dem Filterbett der Aktivkohlekörper gebildet; die Filtermasse durchwandert den Filterbehälter diskontinuierlich von oben nach unten und wird – vorzugsweise ebenfalls im Gegenstrom – von den zu reinigenden Abgasen durchströmt, wenn auch grundsätzlich ein Kreuzstrom angewendet werden kann. Ohne Anspruch auf Vollständigkeit sei schliesslich auf sogenannte Pebble Heater hingewiesen, das sind Teilchen-Wärmetauscher, bei denen die wärmetauschende Masse aus keramischen Körpern oder Stahlkugeln besteht, welche im Behälter des Wärmetauschers von oben nach unten zumindest diskontinuierlich strömen und vom wärmetauschenden Gas vorzugsweise im Gegenstrom von unten nach oben, jedoch grundsätzlich auch im Kreuz-, Gleich- oder im Kreuz-Gegenstrom, durchströmt werden können.

Für alle die vorgenannten bekannten Systeme aus Schüttgut-Haufwerken besteht das Problem der Probenentnahme, die während des Betriebs erfolgen und einen möglichst repräsentativen Querschnitt des Schüttgut-Haufwerks erfassen soll, ohne dass die erwünschte, möglichst in planparallelen Schichten bzw. nach Art einer Kolbenbewegung erfolgende Strömung des Schüttgutes in Richtung auf einen unerwünschten Kernfluss beeinflusst würde. Bei einem unerwünschten Kernfluss ergeben sich bevorzugte Strömungszonen des Schüttgutes auf Kosten anderer Zonen, die dann praktisch in Ruhe verbleiben und deshalb auch als tote Zonen bezeichnet werden. Diese Gesichtspunkte sind für die Filtertechnik von besonderer Bedeutung, und insbesondere für die Adsorptionsfilter in kerntechnischen Anlagen, wo die Funktion des Filters im Dauerbetrieb unter allen Umständen aufrechterhalten und ein sogenannter Filterdurchbruch vermieden werden muss, weil bestimmte Grenzwerte, z.B. minimaler Restgehalt an radioaktivem Jod (Spaltjod) in der Abluft unterhalb eines Grenzwertes, garantiert werden müssen. Derartige Adsorptionsfilter, die insbesondere mit Aktivkohle als Filtermasse arbeiten, müssen Abscheidegrade von mindestens 99% haben. Näheres zu den besonderen Aufgaben von Adsorptionsfiltern in der Kerntechnik ergibt sich aus der DE-C-2 625 275.

Die aus den eingangs genannten drei Patentschriften entnehmbaren Probenentnahmevorrichtungen, von denen die Erfindung gemäss Gattungsbegriff ausgeht, sind nicht geeignet, einen repräsentativen Schüttgut-Querschnitt aus dem im Entnahmezeitpunkt relativ stationären Schüttgut-Haufwerk ohne Störung der Kolbenströmung zu entnehmen, weil die dort gezeigten Entnahmeschnecken mit konstanter Wendelhöhe die Eigenschaft haben, das Schüttgut fast nur von ihrem Eintauchende zur Austragsöffnung zu fördern. Unter relativ oder quasi stationär wird bei einem Haufwerk hier verstanden, dass sich das Schüttgut an sich in Ruhe befindet, jedoch im Falle der Probenentnahme in die durch die Entnahme entstehenden Hohlräume von oben nachrutschen kann, wobei ein Nachrutschen möglichst in zueinander planparallelen Schichten erwünscht ist, damit das Querschnittsbild des Haufwerkes nicht gestört wird. Mit anderen Worten: In einem aus fliessfähigen Masseteilchen bestehenden Schüttgut-Haufwerk, das sich im relativ stationären bzw. quasi stationären Zustand befindet, können die Masseteilchen im Entnahmefalle nachrutschen, und auf diesen Fall der Probenentnahme bezieht sich die vorliegende Erfindung. Das bedeutet, dass bei kontinuierlich strömenden Schüttgut-Haufwerken, insoweit als die Erfindung sich darauf erstreckt, zur Probenentnahme ein quasi stationärer Zustand herbeigeführt werden muss. In einem kontinuierlich von oben nach unten strömenden Schüttgut-Haufwerk könnte bei Probenentnahme mit einer Entnahmeschnecke, die über ihre Länge die gleiche Wendelhöhe aufweist, zwar vermieden werden, dass die Masseteilchen nur vom Schneckenende zur Austragsöffnung hin gefördert werden, jedoch wäre gleichfalls eine über den Querschnitt repräsentative Entnahme nicht erzielbar, weil die jeweils der Austragsöffnung am nächsten liegenden Masseteilchen aus dem Haufwerkquerschnitt überwiegen und so die übrigen Querschnittszonen in der Probe weniger oder gar nicht berücksichtigt werden.

Die oben erläuterten Mängel bekannter Probeentnahmevorrichtungen treffen auch für die in der US-A-3 206 981 offenbarte Probeentnahmevorrichtung zu, obgleich dort auch Entnahmespiralen offenbart sind, deren äusserer Durchmesser nahe der Antriebsseite grösser ist als an ihrem gegenüberliegenden Ende. Diese Entnahmespiralen sind aus einem vergleichsweise dünnen Metalldraht ohne Kern gewickelt und können schon aus diesem Grunde keine quantitative Förderung und schon gar keinen repräsentativen Querschnitt aus verschiedenen Tiefen der Schüttung fördern.

Der Erfindung liegt die Aufgabe zugrunde, eine Probenentnahmevorrichtung gemäss Gattungsbegriff des Anspruchs 1 zu schaffen, mit der es ermöglicht ist, in beliebigen Höhen des Schüttgut-Haufwerkes Proben zu entnehmen, die für den Querschnitt des Haufwerkes an der betreffenden Stelle repräsentativ sind, ohne dass dabei die planparallele Schichtung oder die sogenannte Kolbenströmung des Schüttgut-Haufwerkes in dieser Querschnittszone merklich gestört würde. Mit anderen Worten: Es sollen aus jeder der senkrecht zur Schneckenachse gedachten Entnahmesäulen in etwa gleich viel Masseteilchen entnommen werden, so dass – wenn sich die Entnahme auf einen Teilquerschnitt oder den gesamten Querschnitt erstreckt – sich im betroffenen Säulenvolumen die Schichtung des Haufwerks lediglich parallel zu sich selbst verschiebt und auch beim bodenseitigen Abziehen und/oder beim deckseitigen Zuführen des Schüttgutes eine analoge Parallelverschiebung der Schichten als Kolbenströmung erfolgt.

Erfindungsgemäss wird die gestellte Aufgabe bei einer Probenentnahmevorrichtung gemäss Oberbegriff des Anspruchs 1 durch die im Kennzeichen des Anspruchs 1 angegebenen Merkmale gelöst. Vorteilhafte Weiterbildungen sind in den abhängigen Ansprüchen 2 bis 17 angegeben. Durch die besondere Gestalt und insbesondere Konizität der Entnahmeschnecke wird erreicht, dass neben dem Transport einer Schüttgut-Kernabschnittsmenge (d.h. der Menge, die von den äussersten, im Durchschnitt die kleinste Wendelhöhe aufweisenden Schneckengängen gefördert wird) zwischen den einzelnen Schneckengängen vom Eintauchende in Richtung auf die Austragsöffnung jeweils von Wendelhöhe zur nächst grösseren Wendelhöhe weitere Schüttgut-Teilmengen zur Kernmenge hinzu kommen. Hierdurch wird, bezogen auf die Ebene in einem Schüttbett, in welches die Entnahmeschnecke hineinragt, und in senkrecht dazu stehenden Ebenen eine Probennahmemenge in Form eines langgestreckten Volumens aus dem Schüttgut-Haufwerk (Querschnittsprobe) entnommen. Das abtransportierte Schüttgut wird durch von oben zwischen die Wendeln bzw. Schneckengänge der Entnahmeschnecke durch Schwerkraft nachrutschendes Schüttgut aufgefüllt.

In bevorzugter Ausführung ist das Schüttgut-Haufwerk ein Schüttgut-Filter gemäss Anspruch 6, wobei die Entnahmeschnecke im wesentlichen senkrecht zur Fluidströmungsrichtung in das Filterbett ragt. Ein besonders wichtiger Anwendungsfall eines solchen Schüttgutfilters ist ein Adsorptionsfilter, insbesondere ein Aktivkohlefilter, wie es vielfach in kerntechnischen Anlagen oder überall in solchen Anlagen angewendet wird, wo Luft oder Abgase von schädlichen Gasen oder Aerosolen gereinigt werden müssen. Dabei erfolgt eine diskontinuierliche Strömung des Adsorptionsmittels von oben nach unten und eine kontinuierliche Strömung (abgesehen von Wartungspausen) der zu filternden Gase im Gegenstrom von unten nach oben. Bei solchen Adsorptionsfiltern ragt mindestens eine Entnahmeschnecke in horizontaler Richtung in das Filterbett. Hierbei wird also die abtransportierte Aktivkohle durch von oben in die Wendel der Entnahmeschnecke durch Schwerkraft nachrutschende Aktivkohle aufgefüllt. Die neu in die Schneckenräume eingelagerte Aktivkohle nimmt dann ihrerseits am Adsorptionsprozess weiter teil, wie alle anderen Kohlekörner, welche in gleicher Höhe des Filterbettes, aber ausserhalb der Entnahmeschnecke, liegen. In Normalbetrieb ebenso wie auch während der Entnahme umströmt die zu filternde Luft auf dem Weg durch das Filterbett auch die Konturen des Kerns und der Wendel der Entnahmeschnecke. Hierdurch ist gewährleistet, dass die Aktivkohle, welche auch während des Beladevorganges zwischen den Wendeln eingelagert ist, am Adsorptionsprozess und damit am Beladevorgang teilnehmen kann. Es wird also speziell bei einem Adsorptionsfilter der geschilderten Aufbauform erreicht, dass das Adsorptionsmittel bzw. die Aktivkohle nur aus Ebenen gleichen Beladefortschrittes entnommen werden kann, es erfolgt also keine Fehlinformation, sondern es kann anhand der entnommenen Chargen der Ist-Beladezustand für die gegebene Entnahmeebene festgestellt werden, so dass abhängig davon verbrauchtes Filtermaterial unten abgezogen und unverbrauchtes von oben zum Nachrutschen gebracht oder aber dieser Vorgang noch aufgeschoben werden kann. Dabei wird die Schichtung des Filterbettes in praktisch planparallel zueinander liegenden Schichten aufrechterhalten und der störende Kernfluss vermieden.

Im folgenden wird anhand der Zeichnung, in der fünf Ausführungsbeispiele dargestellt sind, die Erfindung noch näher erläutert. Darin zeigt, z.T. in vereinfachter schematischer Darstellung:

Fig. 1, z.T. im Schnitt, eine Probenentnahmevorrichtung, die durch die Seitenwand eines Behälters mit ihrer Entnahmeschnecke in das Schüttgut-Haufwerk ragt, wobei zum besseren Verständnis die Darstellung nicht massstabgerecht ist;

Fig. 2 die Ansicht II–II in Längsrichtung der Entnahmeschnecke;

Fig. 3 eine Entnahmeschnecke im Ausschnitt, bei der die Aussenkontur im Gegensatz zu Fig. 1 nicht stufenförmig, sondern stetig konisch verjüngt ist, wobei der Schneckenkern ebenso wie beim Beispiel nach Fig. 1 zylindrisch mit gleichem Durchmesser über die Schneckenlänge ausgeführt ist;

Fig. 4 ein drittes Ausführungsbeispiel einer Entnahmeschnecke, bei der die Umhüllende über deren Länge einen konstanten Durchmesser aufweist, dagegen der Kerndurchmesser vom schüttgut-äusseren Schneckenanfang bis zum schüttgut-inneren Schneckenende zunimmt;

Fig. 5 für die grundsätzliche Schneckenausführung nach Fig. 3 ein Diagramm, in welchem abhängig von der Schneckenlänge bzw. der Gangzahl (Abszisse) die Wendelhöhe in Millimeter (Ordinate) aufgetragen ist, wobei die Schneckenausführungsform, auf die sich die Diagrammwerte beziehen, etwas deutlicher als in Fig. 3 im Ausschnitt in das Diagrammfeld eingezeichnet ist;

Fig. 6, 7 und 8 z.T. im Schnitt, im Aufriss, Seitenriss und Grundriss ein kastenförmiges Adsorptionsfilter, welches mit fünf Probenentnahmevorrichtungen ausgerüstet ist, deren Entnahmeschnecken die grundsätzliche Ausführung nach Fig. 3 aufweisen; und

Fig. 9 im Aufriss, schematisch, mehrere Probenentnahmevorrichtungen, die an zwei einander benachbarten Filterkästen angeschlossen sind, denen ein gemeinsames Sammelrohr mit Auffangbehälter zugeordnet ist.

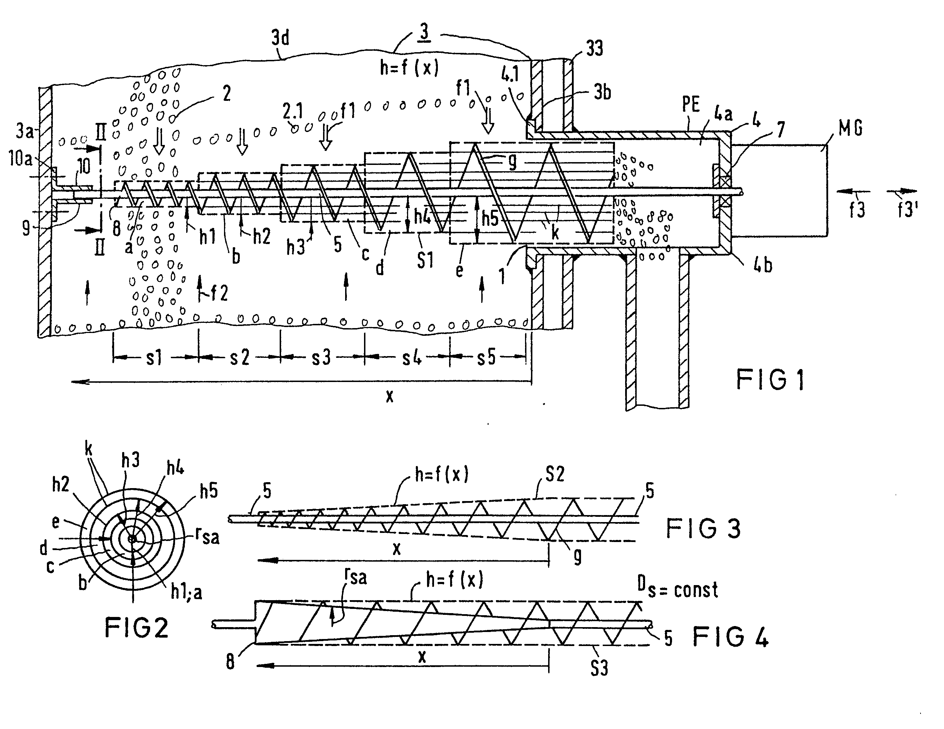

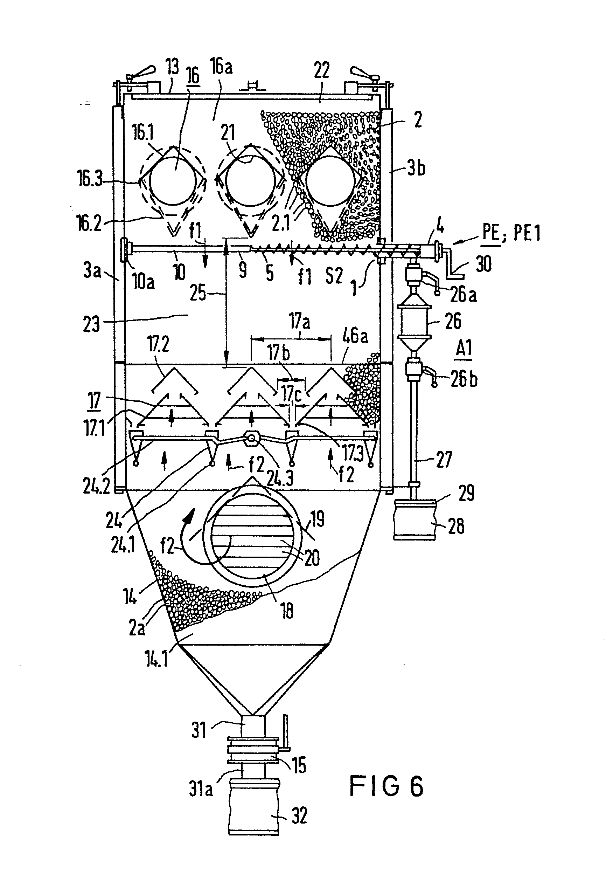

Die generell mit PE bezeichnete Probenentnahmevorrichtung nach Fig. 1 ragt mit einer nicht ummantelten Entnahmeschnecke S1 durch eine im Querschnitt kreisförmige Austragsöffnung 1 eines ein Schüttgut-Haufwerk 2 enthaltenden Behälters 3. Der Behälter 3 ist insbesondere kastenförmig mit einem rechteckigen Grundriss, wobei die einander mit Abstand gegenüberliegenden Behälterwände 3a und 3b, die hintere Wand 3d und eine äussere Versteifungsrippe 33 zu sehen sind. Der Behälter 3 gehört z. B. zu einem Adsorptionsfilter, wobei die einzelnen Masseteilchen 2.1 des Schüttgut-Haufwerkes 2 Aktivkohlekörper sein können, z.B. aus stranggepresster Kohle hergestellte zylindrische Körper von 1 bis 2 mm Durchmesser und 1,2 bis 2 mm Länge. Wie es die Strömungspfeile f1 symbolisieren, durchströmen die Masseteilchen 2.1 des Schüttgut-Haufwerkes 2, das man in diesem Falle auch als Filterbett bezeichnen kann, den Behälter 3 und die Gänge der Entnahmeschnecke S1 von oben nach unten. Dies geschieht, wenn bodenseitig am Behälter, wie später anhand der Fig. 6 näher erläutert, Masseteilchen 2.1 abgezogen werden und deckseitig entsprechende Mengen von Schüttgut nachrutschen. Im Falle eines Adsorptions-, insbesondere Aktivkohlefilters befindet sich das Haufwerk 2, abgesehen vom vorerwähnten Masseteilchen-Austausch, in einem quasi stationären Betrieb, d.h. Masseteilchen rutschen nur nach, wenn in partiellen Querschnittsbereichen durch die Probenentnahmevorrichtung PE Schüttgutproben entnommen werden. Im Falle des Adsorptionsfilters strömt normalerweise die zu reinigende Luft gemäss Pfeilen f2 im Gegenstrom von unten nach oben durch das Filterbett; auch dies wird näher anhand der Fig. 6 erläutert. Die Erfindung ist jedoch nicht auf Gegenstrom-Adsorptionsfilter beschränkt, sondern grundsätzlich auch auf solche Filter anwendbar, deren Filterbett im Kreuzstrom oder Kreuz-Gegenstrom vom zu reinigenden Gas durchströmt wird; auch in diesem Falle würde die Probenentnahmevorrichtung PE mit ihrer Entnahmeschnecke S1 zweckmässigerweise quer zur Gasströmungsrichtung in das Filterbett ragen. Wie eingangs bereits erläutert, ist die Erfindung aber auch bei anderen Schüttgut-Haufwerken überall da mit Vorteil anzuwenden, wo es darauf ankommt, eine Probenentnahme im quasi stationären Zustand des Haufwerkes durchzuführen, welche einen repräsentativen Querschnitt des Haufwerkes ergeben und dabei die erwünschte Kolbenströmung nicht stören soll.

Das Schneckengehäuse 4 der Probenentnahmevorrichtung PE ist eine zylindrische Haube, welche die Wand 3b durchdringt und mit einem Flansch 4.1 an der die Austragsöffnung 1 umgebenden Wandpartie 3b befestigt bzw. angeschweisst ist, desgleichen an der Versteifungsrippe 33. Die Schneckenachse 5 durchdringt im Bereich eines Umlenkraumes 4a die Stirnwand 4b des Schneckengehäuses 4 in einem Drehlager 7, wobei aussen auf der Stirnwand 4b ein Motor- und Getriebekasten MG befestigt ist, oder eine Handkurbel befestigt sein kann, welche Elemente mit der Schneckenachse 5 auf nicht näher dargestellte Weise gekuppelt sind, so dass – bei Betrachtung in Richtung des Pfeiles f3 – bei Drehung der Schnecke S1 im Gegenzeigersinn entsprechende Schüttgut-Proben aus dem Haufwerk 2 in den Raum 4a und von dort zu einer in Fig. 1 nicht näher dargestellten Auffangeinrichtung gefördert werden können.

Der besseren Übersichtlichkeit wegen sind die Masseteilchen 2.1 des Haufwerkes nur partiell dargestellt, obgleich sie den gesamten in Fig. 1 dargestellten Behälterraum ausfüllen, und die Schnecke S1 ist wesentlich dicker und kürzer als in Wirklichkeit dargestellt, damit die Wirkungsweise besser erkennbar ist. Aus Fig. 1 und 2 wird deutlich, dass die Flächenprojektion der generell mit g bezeichneten Schneckengänge auf eine normal zur Schneckenachse 5 verlaufend gedachte Projektionsfläche mit zunehmender Eintauchtiefe x der Schnecke S1 in das Haufwerk 2 kleiner werdende Förderflächen ergibt, für deren Grösse die generell mit h bezeichnete Wendelhöhe der Schneckengänge g massgebend ist und deren Abhängigkeit von der Ortskoordinate x durch die Beziehung $h = f(x)$ zum Ausdruck gebracht ist. Die Wendelhöhe h ist der vom Schneckenkern, d.h. dem Aussenumfang der Schneckenachse 5, bis zum Schneckenaussenumfang gemessene Abstand. Dieser ist für die zum Eintauchende 8 der Schnecke hin sich stufenförmig verjüngende Schneckenausführung nach Fig. 1 und 2 mit h5 bis h1 bezeichnet bzw. vom Eintauchende 8 bis zur Austragsöffnung 1 gesehen mit h1 bis h5. Die einzelnen Schneckenabschnitte tragen in der gleichen Richtung gesehen die Bezugszeichen s1 bis s5, und die koaxial und zum Teil konzentrisch zueinander sich ausbildenden hohlzylindrischen, hohlkolbenartig zum Austragsende 1 geförderten Schüttgutschichten von innen nach aussen gesehen die Bezugszeichen a bis e. Wenn sich also die Schnecke S1 in Förderrichtung dreht, werden zunächst die an den jeweiligen Schneckenabschnitten s1 bis s5 sich befindlichen hohlzylindrischen Abschnitte der Masseteilchen a bis e zur Austragsöffnung 1 transportiert, d.h. jeder der Schneckenabschnitte s1 bis s5 entnimmt aus dem ihn umgebenden Haufwerk 2 eine repräsentative Schüttgutprobe, gleichmässig verteilt über die Schneckenlänge. Diese Wirkung ist nicht nur bei den ersten Schneckenumdrehungen gewährleistet, sondern für beliebig viele Schneckenumdrehungen, sofern nur genügend Schüttgut von oben nachrutschen kann. Das beruht darauf, dass der Schneckenabschnitt s1 jeweils einen hohlzylindrischen Schüttgutabschnitt a in Austragsrichtung f3' hohlkolbenartig fördert, der Schneckenabschnitt s2 jeweils seinen hohlzylindrischen Schüttgutabschnitt b, welcher sich am Aussenumfang des Schüttgutabschnitts a anlagert, usf. Dieser Förderwirkung, bei der sich jeweils hohlzylindrische Schüttgutabschnitte schichtweise am Aussenumfang von hohlzylindrischen Schüttgutabschnitten kleineren Durchmessers anlagern und mit diesen sich hohlkolbenartig in Förderrichtung bewegen, ist durch die Eintragung der horizontalen Schichtlinien k in Fig. 1 verdeutlicht, denen die konzentrischen Kreise k in Fig. 2 entsprechen. In Fig. 2 ist noch der Radius des Schneckenkerns 5 mit $r_{sa}$ bezeichnet. Bei Entnahmeschnecken grösserer Länge empfiehlt es sich, so wie in Fig. 1 angedeutet, das Eintauchende 8 der Entnahmeschnecke S1 an einem Drehlager 9 zu lagern, welches von einem Haltestab bzw. Halterohr 10 getragen oder gebildet ist, welches z. B. mit einem Flansch 10a an der Seitenwand 3a in Flucht mit der Schneckenachse 5 befestigt ist. Die Entnahmeschnecke S1 nach Fig. 1 ist in Richtung x nach Art einer Treppenkurve verjüngt. Dies hat den Vorteil, dass die Entnahmeschnecke aus einzelnen Schneckenabschnitten s1 bis s5 unterschiedlichen Durchmessers, die im Handel erhältlich sind, entsprechend der gewünschten Länge zusammengesetzt werden kann, wobei der zentrale Schneckenkern bzw. die Schneckenachse 5 aus einem Zuganker bestehen kann, auf den die einzelnen Schneckenabschnitte aufgeschoben und mittels Keil, Verzahnung o.dgl. verdrehungssicher gehalten werden können. In Achsrichtung können die einzelnen Schneckenabschnitte durch eine geeignete Verschraubung zusammengehalten werden (nicht dargestellt).

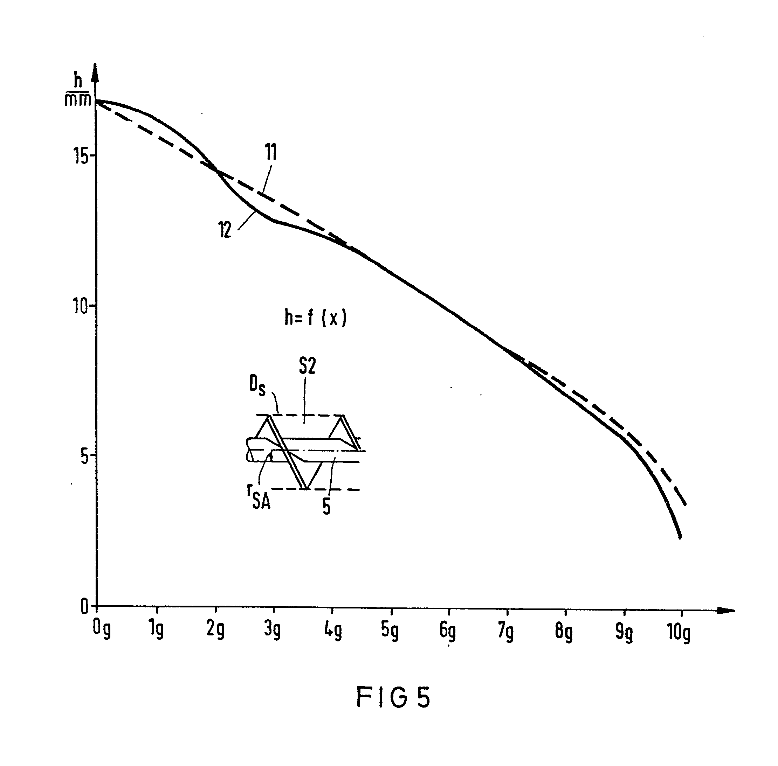

Die Gleichmässigkeit der Entnahme des Schüttgutes kann durch eine Ausführung der Entnahmeschnecke S2 gemäss Fig. 3 noch verbessert werden, bei der die Wendelhöhe h eine stetige Funktion von x ist, d.h. die Wendelhöhe h nimmt in Richtung x zum Eintauchende 8 hin stetig konisch verjüngt ab, dementsprechend nehmen die Förderflächen ab. Der Schneckenkern bzw. der Durchmesser der Schneckenachse 5 bleiben über die Länge x wie beim ersten Ausführungsbeispiel konstant. Die Schnecke S2 ist nicht rechtsgängig wie die Schnecke S1, sondern linksgängig; sie entnimmt demnach Proben, wenn sie bei Betrachtung in Richtung f3 im Uhrzeigersinn gedreht wird. Dieses Ausführungsbeispiel nach Fig. 3 wird im übrigen anhand der Fig. 5 noch näher erläutert werden. Hingewiesen sei ferner auf das Ausführungsbeispiel der ebenfalls linksgängigen Entnahmeschnecke S3 nach Fig. 4, bei dem die Entnahmeschnecke S3 einen über ihre Förderlänge bzw. die Koordinate x konstanten Aussendurchmesser aufweist, d.h. $D_s$ = const., bei der aber ihr Kerndurchmesser $r_{sa}$ vom schüttgut-äusseren Schneckenanfang (x = 0) bis zum schüttgut-inneren Schneckenende 8 zunimmt. Die Ganghöhe h ist damit gleichfalls eine Funktion der Ortskoordinate x in dem Sinne, dass sie mit wachsendem x abnimmt, womit gleichzeitig auch die Förderflächen kleiner werden. Hierbei tritt gleichfalls ein hohlkolbenartiger, schichtweiser Transport so wie anhand von Fig. 1 erläutert auf, jedoch bilden die vom Eintauchende herkommenden hohlzylindrischen Schichten nicht die inneren, sondern die äusseren Schichten, und die der Austragsöffnung 1 am nächsten liegenden Schichten bilden nicht die äussersten, sondern die innersten Schichten. Der Ausführungsform nach Fig. 3 ist jedoch gegenüber der nach Fig. 4 der Vorzug zu geben, weil das Entnahmeschneckenvolumen der Schnecke S3 nach Fig. 4 bei gleicher Förderleistung grösser ist als dasjenige der Schnecke S2 nach Fig. 3 und damit das Prinzip, dass durch die Probenentnahmeeinrichtung das Schüttgut-Haufwerk möglichst wenig beeinflusst werden soll, durch die Schneckenausführung nach Fig. 3 besser verwirklicht ist.

Der ausschnittsweise dargestellten Schneckenausführung gemäss Fig. 5 ist gleichfalls das Konzept zugrunde gelegt, dass die (im übrigen rechtsgängige) Entnahmeschnecke S2 eine von der Austragsöffnung 1 bis zu ihrem Eintauchende 8 (Fig. 3) sich im wesentlichen konisch verjüngende Aussenkontur aufweist und dass der Schneckenkern 5 zylindrisch verläuft. Es wäre bei dieser Ausführungsform auch möglich, dass der Schneckenkern 5 sich ebenfalls zum Eintauchende hin konisch verjüngt; dabei ist es jedoch erforderlich, dass der Verjüngungskegel spitzer ist als der Verjüngungskegel der Schnecken-Aussenkontur, d.h. einen spitzen Winkel $0 < \alpha < \beta$ aufweist, wenn $\alpha$ der Spitzenwinkel der Verjüngung des Schneckenkerns und $\beta$ der Spitzenwinkel der Verjüngung der Schnecken-Aussenkontur ist. In Fig. 5 bedeutet 11 eine rechnerisch ermittelte Kurve, welche die Wendelhöhe in Abhängigkeit von der Gangzahl g, und zwar vom Austragsende (Gangzahl 0g) bis zum Eintauchende (Gangzahl 10g) angibt. Für die Rechnung wurde angenommen, dass die Entnahmeschnecke näherungsweise eine achsparallele Strömung der Masseteilchen erzeugt. Diese Kurve 11 ist in erster Näherung richtig; durchgeführte Versuche machten jedoch eine Korrektur der Schneckenkontur, so wie es die Kurve 12 zeigt, erforderlich. Danach nimmt die Wendelhöhe in Richtung der Ortskoordinate x, die hier von links nach rechts verläuft, mit zunehmender Gangzahl angenähert linear ab, nimmt aber im Bereich mindestens der drei letzten Schneckengänge 8g bis 10g überproportional ab. Die Wendelhöhe, so wurde gefunden, muss einer weiteren Korrekturfunktion unterworfen werden, und zwar etwa im Bereich der ersten beiden Schneckengänge von 0g bis 2g in Richtung zu grösseren Werten korrigiert werden und im Bereich mindestens der dritten und vierten Schneckengänge von 2g bis 4g zu niedrigeren Wendelhöhenwerten korrigiert werden, weist also etwa bei 2g einen Wendepunkt auf. Diese Wendelhöhenkorrekturen betragen bei einer Schnecke mit einer mittleren Wendelhöhe von 1 bis 1,5 mm nur wenige Millimeter und sind in dem Ausschnitt nach Fig. 5, der sich von links nach rechts verjüngt, kaum zu erkennen. Aufgrund dieser Wendelhöhenkorrekturen konnte bei der getesteten Entnahmeschnecke ein über den Querschnitt eines Aktivkohlefilters praktisch vollkommen gleichmässiger Austrag des Filtermaterials erzielt werden.

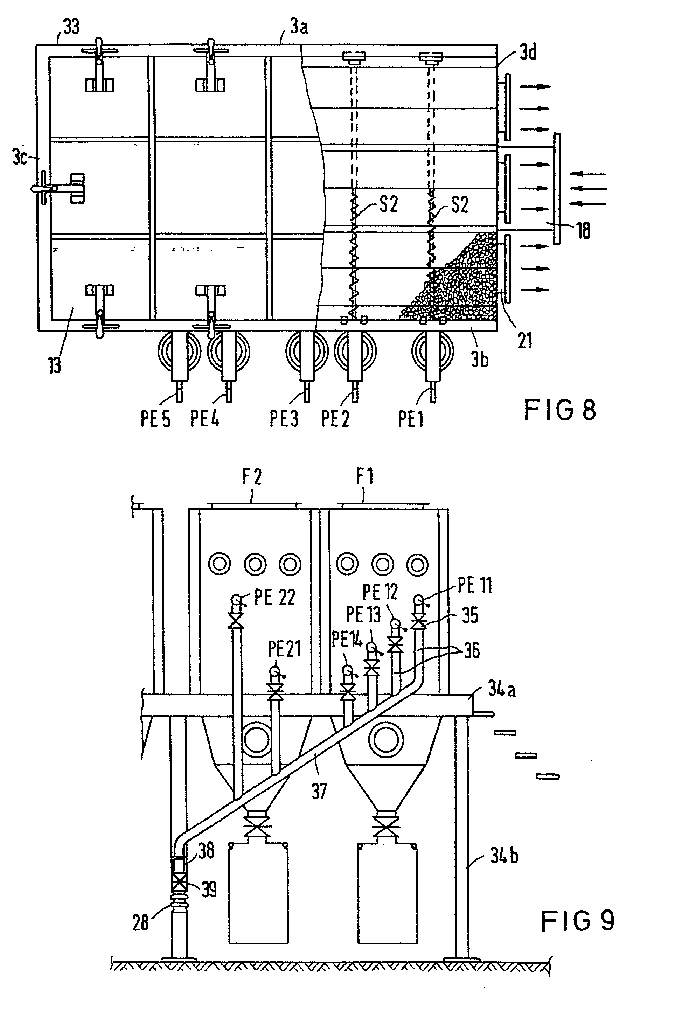

Anhand von Fig. 1 wurde bereits erläutert, dass das Schüttgut-Haufwerk 2 in einem bevorzugten Anwendungsfall ein Schüttgutfilter ist, das von den zu reinigenden Fluiden durchströmt wird und hierzu auf zwei einander gegenüberliegenden Filterseiten jeweils Zuführungen und Abführungen für das Fluid aufweist, wobei die Entnahmeschnecke S1 im wesentlichen senkrecht oder quer zur Fluidströmungsrichtung (Pfeile f2) in das Haufwerk 2 – in diesem Falle das Filterbett – ragt. Dies ist auch der Fall beim vierten Ausführungsbeispiel nach Fig. 6 bis 8, wobei zunächst auf Fig. 6 eingegangen wird. Gleiche Teile tragen gleiche Bezugszeichen. Hierbei ist das Schüttgut-Haufwerk 2 ein Adsorptionsfilter, insbesondere ein Aktivkohlefilter, mit diskontinuierlicher Strömung der Masseteilchen bzw. Aktivkohlekörper 2.1 des Adsorptionsmittels von oben nach unten gemäss Strömungspfeilen f1, in diesem Falle auch entlang der Wendel der Entnahmeschnecke, und mit kontinuierlicher Strömung der zu filternden Gase im Gegenstrom dazu von unten nach oben gemäss Strömungspfeilen f2. Dabei ragt mindestens eine Entnahmeschnecke S2 einer Probenentnahmevorrichtung PE in horizontaler Richtung in das Filterbett 2. Das in den Figuren 6 bis 8 dargestellte Adsorptionsfilter besteht im wesentlichen aus dem kastenartigen Gehäuse oder Behälter 3 mit dem verschliessbaren Deckel 13 und dem sich nach unten konisch verjüngenden, trichterartigen Boden 14, der in einen Auslassrohrstutzen 31 mündet, mit einer Entleerungsöffnung und einem dieser zugeordneten Verschluss 15, aus den oberen Einbauten 16, den unteren Einbauten 17 und einer Gaszuführung 18. Der oberhalb des trichterförmigen Bodens 14 kastenförmige Filterbehälter 3 mit rechteckigem Grundriss weist ausser den beiden Seitenwänden 3a, 3b (Längsseiten) das Seitenwandpaar 3c, 3d (Schmalseiten), siehe Fig. 8, auf. Das Adsorptionsmittel in Form der fliessfähigen Filtermasse, insbesondere Aktivkohlekörper, befindet sich im wesentlichen im Bereich zwischen den unteren Einbauten 17 und dem Deckel 13 und füllt den Raum zwischen den unteren Einbauten 17 und den oberen Einbauten 16 voll aus. Der Zuführungsstutzen der Gaszuführung 18 ist gegen herabfallendes Adsorptionsmittel 2 mit einem spitzen Dach 19 und einem grossflächigen Sieb 20 geschützt. Aus dem Filter wird das Gas mittels der oberen Einbauten 16 abgeführt, bei denen es sich um mehrere parallel zueinander angeordnete und sich von der vorderen 3c zur hinteren Gehäusewand 3d erstreckende Abgasrohre handelt. Diese bestehen aus einer oberen dachförmigen Abdeckung 16.1 und einer nach unten gerichteten, V-förmigen siebartigen Abdeckung 16.2, wobei die Dachkanten 16.3 der oberen Abdeckung die jeweilige nach unten gerichtete Abdeckung überragen. Die Abgasrohre 16 sind an Sammelrohre 21 angeschlossen, die mit nicht näher bezeichneten Flanschen an der hinteren Gehäusewand 3d befestigt sind. Die Abgasrohre 16 bilden zugleich Fliessleitkörper zur gleichmässigen Verteilung des im Vorratsraum 22 befindlichen Adsorptionsmittels 2. Sie sind, wie ersichtlich, mit definiertem Abstand zueinander und zu den Gehäusewänden angeordnet.

Das von oben eingefüllte Adsorptionsmittel trifft im unteren Bereich des Behälters 3 auf die Einbauten 17, bei denen es sich um Konstruktionselemente zum Tragen des Adsorptionsmittel-Haufwerkes 2, zum gleichmässigen Einleiten des zu reinigenden Gases in den Adsorptionsraum 23 und zum gleichmässigen Abtragen einer verbrauchten bzw. beladenen Schicht des Adsorptionsmittels handelt. Diese Einbauten 17 bestehen aus jalousieartig zweiteiligen symmetrischen Dächern mit einem trapezförmigen Unterteil 17.1 und einem firstartigen gegenüber dem Unterteil 17.1 mit Vertikalabstand angeordneten Oberteil 17.2. Die Einbauten 17 sind jeweils senkrecht unter einem Abgasrohr 16 und parallel zu diesem derart angeordnet, dass sich analog zu den oberen Einbauten definierte, sich von oben nach unten etwa trichterfömig verkleinernde Achsabstände 17a, 17b und 17c ergeben, und analoge Abstände zu den Gehäusewänden 3a, 3b, wobei der Neigungswinkel aller Dachschrägen der unteren Einbauten 17 etwa 45° beträgt. Die sich nach unten trichterförmig verjüngenden Zwischenräume zwischen den unteren dachförmigen Einbauten münden über mittels Absperrschiebern 24 verschliessbare Längsschlitze 17.3 in den Sammelraum 14.1 des Trichterbodens 14. Die Absperrschieber 24 sind an Schwenkachsen 24.1 in beiden Schwenkrichtungen schwenkbar gelagert und miteinander über ein Antriebsgestänge 24.2 gekoppelt, welches von einer mittig angeordneten Antriebswelle 24.3 bewegt werden kann. Der Adsorptionsraum 23, also die aktive Zone des Filters, ist durch den Abstand 25 zwischen den oberen Spitzen der unteren Einbauten 17 und den unteren Spitzen der oberen Einbauten 16 gegeben. Dieser Abstand beträgt je nach Baugrösse des Filters zwischen 200 bis 1000 mm. Man erkennt, dass beim Ablass einer Schicht des Adsorptionsmittels 2 durch Öffnen der Absperrschieber 24 die durch die Schlitze 17.3 nach unten in den Raum 14.1 rieselnden Masseteilchen eine gewisse Strecke im freien Fall zurücklegen, bis sie auf das untere Haufwerk 2a der verbrauchten Masseteilchen treffen; dies ist wichtig, damit sich innerhalb des Adsorptionsraumes 23 eine sogenannte Kolbenströmung mit praktisch planparalleler Fortbewegung der Haufwerkschichten von oben nach unten einstellen kann, wobei entsprechend den an der Unterseite abgelassenen Schichten von oben aus dem oberen Vorratsraum 16a entsprechende Schichten unverbrauchten Adsorptionsmittels nachströmen können.

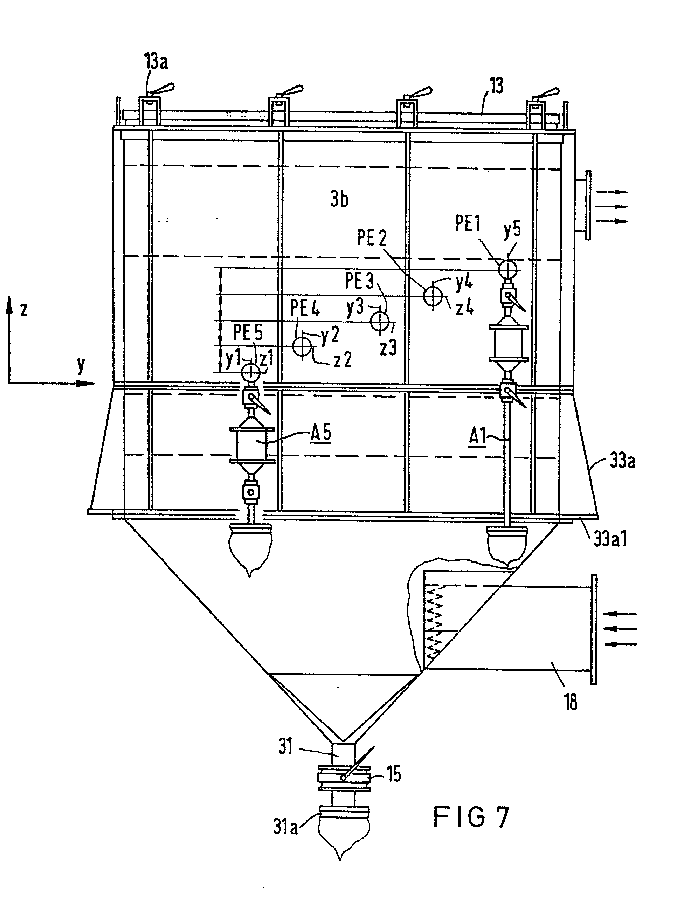

Aus Fig. 6 erkennt man weiter die schon erwähnte Probenentnahmevorrichtung PE, die im Prinzip ähnlich aufgebaut ist wie diejenige nach Fig. 1 und eine sich zum Eintauchende konisch verjüngende Entnahmeschnecke analog Fig. 3 aufweist. Die Abmessungen und Massrelationen entsprechen im Gegensatz zu Fig. 1 und Fig. 3 weitgehend den natürlichen Verhältnissen; die Konizität der Schnecke S2 ist nur gering; sie ist relativ schlank, weil pro Probenentnahme relativ geringe Mengen von einigen 100 g entnommen werden und durch die Schlankheit der Entnahmeschnecke der Verband des Haufwerks in seiner filternden Eigenschaft nur wenig beeinflusst wird. Der Haltestab 10, welcher mit einem Doppelflansch 10a in der Innenwand 3a befestigt ist, ist länger als beim ersten Ausführungsbeispiel nach Fig. 1, so dass die Entnahmeschnecke S2 nur etwas mehr als die halbe Filterbreite überstreicht; sie kann aber auch länger ausgeführt sein und die gesamte bzw. praktisch die gesamte Filterbreite überstreichen. Bei dem dargestellten, einen rechteckigen Grundriss aufweisenden Filter ist es besonders günstig, wenn – wie dargestellt – die Entnahmeschnecke S2 mit ihrer Achse parallel zu Mantelflächen, in diesem Falle die Seitenwände 3c, 3d, des Filterbehälters 3 in das Filterbett 23 hineinragt. Dies erkennt man besonders deutlich aus Fig. 8, die in Verbindung mit Fig. 7 zeigt, dass im dargestellten Ausführungsbeispiel fünf Entnahmeschnecken S2 die zu entsprechenden Einzel-Probenentnahmevorrichtungen PE1 bis PE5 gehören, an einer Mantelfläche (Seitenwand 3b) des Filterbehälters 3 auf verschiedenen Höhenniveaus z1 bis z5, und seitlich gemäss den y-Koordinaten y1 bis y5 gegeneinander verschoben angeordnet sind. In Fig. 6 ist demnach die oberste Probenentnahmevorrichtung PE1 dargestellt. Die Anzahl der Probenentnahmevorrichtungen PE richtet sich nach der Filtergrösse; um einen einigermassen zuverlässigen Anhaltspunkt über den Beladezustand des Adsorptionsmittel zu erhalten, verwendet man zweckmässigerweise mindestens zwei Probenentnahmevorrichtungen, die in der Höhe und seitlich zueinander versetzt sind. Die aus Fig. 7 erkennbare schrägabfallende Formation von mindestens drei Entnahmeschnecken S2, dargestellt sind fünf, hat den Vorteil, dass Probenentnahmen möglich sind, die ein Bild über den Zustand innerhalb der gesamten Filterhöhe ermöglichen und auch über den Zustand längs der y-Koordinate, d.h. quer dazu. Das zugehörige y,z-Koordinatenkreuz ist in Fig. 7 eingezeichnet.

Wie es Fig. 6 zeigt, ist das durch die Behälterwand 3b nach aussen ragende Schneckenende von dem Schneckenrohr 4 umgeben, an das eine Auffangeinrichtung für die entnommenen Filterproben angeschlossen ist. Diese Auffangeinrichtung A1 besteht aus einer Schleuse mit insbesondere schauglasartigem Schleusentopf 26 und diesem vor- und nachgeschalteten Absperrorganen 26a, 26b sowie aus einem an die Schleuse angeschlossenen Ablassrohr 27 mit Auffangbehälter 28. Das Ablassrohr 27 endet in einem gerillten Schutzbeutelring 29, an dem ein insbesondere aus durchsichtigem Kunststoff bestehender Schutzbeutel als Auffangbehälter 28 mit dem Rand seiner Öffnung gasdicht anklemmbar ist. Als Absperrorgane 26a, 26b können Kugelhähne oder Absperrschieber dienen. Diese sind mit Schwenkhebeln zur Handbetätigung, wie dargestellt, versehen; es kann jedoch auch eine Fernbetätigung über angeschlossene Stellmotoren erfolgen. Dieser Gesichtspunkt trifft auch zu für die Kurbel 30 zur Drehung der Schnecke S2; diese Kurbel kann auch durch eine Motorgetriebeeinheit MG gemäss Fig. 1 zwecks Fernbetätigung ersetzt werden.

Jeder der Probenentnahmeeinrichtung PE1 bis PE5 ist eine eigene Auffangeinrichtung A1 bis A5 zugeordnet, siehe Fig. 7, wo der besseren Übersichtlichkeit wegen die Auffangeinrichtungen A2 bis A4 nicht dargestellt sind. Auch das Ablassrohr 31 des Filterbehälters 3 mündet zweckmässigerweise über das Absperrorgan 15, insbesondere einen Drehklappenverschluss, und über einen Schutzbeutelbordring 31a in einen Schutzbeutel 32, welcher an den Bordring 31a gasdicht anklemmbar ist.

Aus Fig. 6 bis 8 erkennt man, dass der Filterbehälter 3 mit seinen Seitenwänden 3a bis 3d noch verstärkt wird von Verstärkungsrippen 33. Diese Verstärkungsrippen 33 haben mechanische Gründe; sie dienen zur Versteifung und Befestigung der Deckelverschlussorgane 13a. Die im unteren Teil des Kastenteils angeordnete pyramidenförmige Wandschürzenerweiterung 33a kann als sogenannte Standzarge dienen, d.h. mit ihren Flächen 33a1 als Abstützung für den Filterbehälter.

Beim Ausführungsbeispiel nach Fig. 9 sind zwei zueinander benachbarte Filter bzw. Filterbehälter F1, F2 gezeigt, die grundsätzlich so ausgebildet sind, wie beim vierten Ausführungsbeispiel nach Figuren 6 bis 8 beschrieben. Sie sind auf einem Stützgerüst, bestehend aus waagrechten Tragbalken 34a und senkrechten Stützen 34b, aufgelagert. Die Probenentnahmeeinrichtungen PE11 bis PE14 des Filters F1 sind ähnlich Fig. 7 seitlich und in der Höhe zueinander versetzt angeordnet, ebenso die Probenentnahmeeinrichtungen PE21, PE22 des Filters 2. Allerdings hat nicht jede Probenentnahmeeinrichtung eine eigene Schleuse, sondern mehrere je einer Entnahmeschnecke über Absperrorgane 35 nachgeschaltete Ablassrohre 36 münden in ein gemeinsames, mit Gefälle verlegtes Sammelrohr 37, welches wiederum über eine Schauglasstrecke 38 und ein zweites Absperrorgan 39 in den gasdicht an das Sammelrohrende anklemmbaren Schutzbeutel 28 mündet. Man spart dadurch pro Probenentnahmeeinrichtung ein Absperrorgan, muss dann aber die Proben zeitlich nacheinander entnehmen, damit eine Vermischung der Proben nicht eintritt. Diese Ausbildung der Auffangeinrichtung kann nicht nur für ein einziges Filter F1, sondern für mehrere einander benachbarte Filter – in Fig. 9 gilt dies für die beiden Filter F1, F2 – getroffen werden.

Als Material für die Entnahmeschnecken S1, S2, S3 wird insbesondere eine korrosionsbeständige Edelstahllegierung verwendet, ebenso wie für die oberen und unteren Einbauten 16, 17 des Filters 3. Auch die den Filterkörpern 2, 2.1 ausgesetzten Innenflächen des Behälters 3 sind zweckmässig korrosionsresistent.

**Patentansprüche**

1. Vorrichtung mit einem Behälter (3) für Schüttgut-Haufwerk (2), welches den Behälter zumindest diskontinuierlich von oben nach unten durchströmt, mit behälterdeckseitiger Zufuhr des Schüttgutes und bodenseitigem Abzug und mit einer Probenentnahmevorrichtung, die eine nicht ummantelte Entnahmeschnecke (S1, S2, S3) aufweist, die durch eine Austragsöffnung (1) in das Haufwerk (2) ragend an der Behälterwand (3b) angebracht und mit einem Drehantrieb (MG, 30) sowie einer Auffangeinrichtung (A, A1–A5, 26 bis 29) versehen ist, in welche die Entnahmeschnecke (S1, S2, S3) bei Drehung Schüttgutproben aus dem Haufwerk fördert, dadurch gekennzeichnet, dass die Flächenprojektion der Schneckengänge (g) auf eine normal zur Schneckenachse (5) verlaufend gedachte Projektionsfläche mit zunehmender Eintauchtiefe (x) der Schnecke (S1, S2, S3) in das Haufwerk (2) kleiner werdender Förderflächen ergibt, so dass bei Probenentnahme im quasi stationären Zustand des Haufwerks (2) zwischen den einzelnen Schneckengängen (g) vom Eintauchende (8) in Richtung auf die Austragsöffnung (1) jeweils von Wendelhöhe ($h_1$, $h_2$, $h_3$ ...) zur nächst grösseren Wendelhöhe ($h_2$, $h_3$, $h_4$ ...) an die erste Teilmenge eines hohlzylindrischen Schüttgutabschnitts (a) sich die Teilmengen weiterer hohlzylindrischer Schüttgutabschnitte (b, c, d, e usf.) schichtweise anlagern, welche repräsentativ für das Schüttgut-Haufwerk (2) des betreffenden Schneckenabschnittes (S1–S5) sind.

2. Vorrichtung nach Anspruch 1, dadurch gekennzeichnet, dass die Förderflächengrösse die Entnahmeschnecke (S1, S2, S3) mit zunehmender Schneckentauchtiefe (x) stetig abnimmt.

3. Vorrichtung nach Anspruch 1 oder 2, dadurch gekennzeichnet, dass die Entnahmeschnecke (S2) eine von der Austragsöffnung (1) bis zu ihrem Eintauchende (8) sich im wesentlichen konisch verjüngende Aussenkontur aufweist und dass der Schneckenkern (5) zylindrisch oder zum Eintauchende (8) ebenfalls konisch verjüngt verläuft und dabei mit einem im Vergleich zur Schnecken-Aussenkontur spitzeren Kegel.

4. Vorrichtung nach Anspruch 1 oder 2, dadurch gekennzeichnet, dass die für die Grösse der jeweiligen Förderfläche massgebende Wendelhöhe (h), der vom Kern (5) zum Schneckenaussenumfang gemessene Abstand, in Richtung der Schneckenachse (5) zum Eintauchende (8) hin gesehen angenähert linear und im Bereich der kleinsten Wendelhöhen (h), insbesondere im Bereich mindestens der drei letzten Schneckengänge (8g–10g), überproportional abnimmt.

5. Vorrichtung nach Anspruch 4, dadurch gekennzeichnet, dass die Wendelhöhe (h) der Schnecke (S2) einer weiteren Korrekturfunktion unterliegt, bei der die – beginnend bei der grössten Wendelhöhe (h) bis zur kleinsten Wendelhöhe – angenähert linear abfallend verlaufende Kurve (12) im Bereich der ersten beiden Schneckengänge (0g, 1g) zu grösseren Werten und im Bereich mindestens der dritten und vierten Schneckengänge (2g, 3g) zu niedrigeren Werten korrigiert ist.

6. Vorrichtung nach Anspruch 1, dadurch gekennzeichnet, dass das Schüttgut-Haufwerk ein Schüttgutfilter ist, das von den zu reinigenden Fluiden durchströmt wird und hierzu auf zwei einander gegenüberliegenden Filterseiten jeweils Zuführungen (16) und Abführungen (17) für das Fluid aufweist, und dass die Entnahmeschnecke (S2) im wesentlichen senkrecht zur Fluidströmungsrichtung (f2) in das Filterbett (2, 23) ragt.

7. Vorrichtung nach Anspruch 6, dadurch gekennzeichnet, dass das Schüttgut-Haufwerk (2) ein Adsorptionsfilter, insbesondere ein Aktivkohlefilter ist, mit diskontinuierlicher Strömung des Adsorptionsmittels (2.1) von oben nach unten und mit kontinuierlicher Strömung der zu filternden Gase im Gegenstrom von unten nach oben, wobei mindestens eine Entnahmeschnecke (S2) in horizontaler Richtung in das Filterbett (23) ragt.

8. Vorrichtung nach Anspruch 6 oder 7, mit einem im wesentlichen rechteckigen Grundriss des Schüttgutfilters, dadurch gekennzeichnet, dass die Entnahmeschnecke (S2) mit ihrer Achse (5) parallel zu Mantelflächen des Filterbehälters in das Filterbett (23) hineinragt.

9. Vorrichtung nach Anspruch 8, dadurch gekennzeichnet, dass mindestens zwei Entnahmeschnecken (S2) an einer Mantelfläche (3b) des Filterbehälters (3) auf verschiedenen Höhenniveaus (z1–z5) des Schüttgutfilters, jedoch seitlich gegeneinander versetzt, angeordnet sind.

10. Vorrichtung nach Anspruch 9, gekennzeichnet durch eine Anordnung der Entnahmeschnecken (S2) an der Behälterwand (3b), dergestalt, dass bei mindestens drei Entnahmeschnecken jede Entnahmeschnecke gegenüber der benachbarten Entnahmeschnecke sowohl in der Höhe als auch seitlich versetzt ist und die jeweils nächstfolgende Entnahmeschnecke in der gleichen Richtung weiter versetzt ist.

11. Vorrichtung nach Anspruch 7, dadurch gekennzeichnet, dass das durch die Behälterwand des Schüttgutfilters nach aussen ragende Schneckenende von einem Schneckenrohr umgeben ist, an das die Auffangeinrichtung angeschlossen ist und dass die Auffangeinrichtung (A; A1–A5) aus einer Schleuse mit insbesondere schauglasartigem Schleusentopf (26) und diesem vor- und nachgeschalteten Absperrorganen (26a, 26b) sowie aus einem an die Schleuse angeschlossenen Ablassrohr (27) mit Auffangbehälter (28) besteht.

12. Vorrichtung nach Anspruch 11, dadurch gekennzeichnet, dass das Ablassrohr (27) in einem gerillten Schutzbeutelbordring (29) endet, an den ein – vorzugsweise aus durchsichtigem Kunststoff bestehender – Schutzbeutel (28) als Auffangbehälter mit dem Rand seiner Öffnung gasdicht anklemmbar ist.

13. Vorrichtung nach Anspruch 9, dadurch gekennzeichnet, dass mehrere, je einer Entnahmeschnecke (S2) über Absperrorgane (35) nachgeschaltete Ablassrohre (36) in ein gemeinsames, mit Gefälle verlegtes Sammelrohr (37) münden, welches wiederum über eine Schauglasstrecke (38) und ein zweites Absperrorgan (39) in den gasdicht an das Sammelrohrende anklemmbaren Schutzbeutel (28) mündet.

14. Vorrichtung nach Anspruch 13, dadurch gekennzeichnet, dass an das Sammelrohr (37) die Ablassrohre (36) der Entnahmeschnecken (S2) von mindestens zwei einander benachbarten Filterbehältern (F1, F2) angeschlossen sind.

15. Vorrichtung nach Anspruch 1, dadurch gekennzeichnet, dass das Eintauchende (8) der Entnahmeschnecke (S1, S2, S3) an einem Drehlager (9) gelagert ist, welches von einem Haltestab (10) getragen ist, der in Flucht mit der Schneckenachse (5) an der dem Schneckenrohr (4) gegenüberliegenden Behälterwand (3a) des Filters (2, 3) befestigt ist.

16. Vorrichtung nach Anspruch 1, dadurch gekennzeichnet, dass die Entnahmeschnecke (S3) einen über ihre Länge konstanten Aussendurchmesser ($D_s$) aufweist, dagegen ihr Kerndurchmesser ($r_{SA}$) vom schüttgut-äusseren Schneckenanfang (1) bis zum schüttgut-inneren Schneckenende (8) zunimmt.

17. Vorrichtung nach Anspruch 1 oder 16, dadurch gekennzeichnet, dass die Förderflächengrösse bzw. die Wendelhöhe (h) der Entnahmeschnecke (S1) mit zunehmender Eintauchtiefe (x) abgestuft nach Art einer Treppenkurve abnehmen.

18. Vorrichtung nach Anspruch 6, dadurch gekennzeichnet, dass das Schüttgut-Haufwerk ein Adsorptionsfilter, insbesondere ein Aktivkohlefilter, ist mit diskontinuierlicher Strömung des Adsorptionsmittels (2.1) von oben nach unten und mit kontinuierlicher Strömung der zu filternden Gase im Kreuzstrom bzw. Kreuz-Gegenstrom durch das Filterbett (23), wobei mindestens eine Entnahmeschnecke (S2) quer zur Gasströmungsrichtung in das Filterbett (23) ragt.

**Claims**

1. Apparatus comprising a container (3) for a mass of bulk material (2), which at least discontinuously passes through the container from the top to the bottom, an inlet for the bulk material at the top of the container and an outlet at the bottom, and a sample withdrawing device which has an uncased withdrawal worm (S1, S2, S3) which is fixed to the container wall (3b) so as to protrude through a discharge opening (1) into the mass of bulk material (2) and is provided with a rotary drive (MG, 20) and a collecting device (A, A1–A5, 26 to 29), to which the withdrawal worm (S1, S2, S3) conveys samples of bulk material from the mass on rotation, characterised in that the surface projection of the worm threads (g) on to an imaginary projection surface extending normally to the axis (5) of the worm with increasing immersion depth (x) of the worm (S1, S2, S3) into the mass (2), results in conveying surfaces which become smaller, so that, during sampling, in the quasi-stationary state of the mass (2), between the individual worm threads (g) from the immersion end (8) in the direction of the discharge opening (1), in each case from one coil level ($h_1$, $h_2$, $h_3$ . . .) to the next higher coil level ($h_2$, $h_3$, $h_4$ . . .), the partial amounts of further cylindrical bulk material sections (b, c, d, e, etc) are added layer-by-layer to the first partial amount of a cylindrical bulk material section (a), which further sections (b, c, d, e, etc) are representative in the mass of bulk material of the respective worm sections (S1–S5).

2. Apparatus as claimed in Claim 1, characterised in that the size of the conveying surface of the withdrawal worm (S1, S2, S3) constantly decreases with increasing depth of immersion (x) of the worm.

3. Apparatus as claimed in Claim 1 or Claim 2, characterised in that the withdrawal worm (S2) has an outer contour which tapers in generally conical manner from the discharge opening (1) to its immersion end (8); and that the worm core (5) extends cylindrically or similarly tapers conically to the immersion end (8) in a cone which is more pointed as compared with the outer contour of the worm.

4. Apparatus as claimed in Claim 1 or Claim 2, characterised in that for the coil levels (h) which determine the size of the respective conveying surfaces, the distance measured from the core (5) to the outer periphery of the worm, is substantially linear viewed in the direction of the worm axis (5) to the immersion end (8), and in the region of the smallest coil levels (h), in particular in the region of at least the three last worm threads (8g–10g), decreases more than proportionally.

5. Apparatus as claimed in Claim 4, characterised in that the coil level (h) of the worm (S2) is subjected to a further correction function, in which – starting at the highest coil level (h) to the smallest spiral level – the curve (12) which decreases substantially linearly, is corrected to have higher values in the region of the first two worm threads (0g, 1g) and to have lower values in the region of at least the third and fourth worm threads (2g, 3g).

6. Apparatus as claimed in Claim 1, characterised in that the mass of bulk material is a bulk material filter, through which fluids to be purified flow and which for this purpose has inlets (16) and outlets (17) for the fluid on two opposite sides of the filter; and that the withdrawal worm (S2) protrudes into the filter bed (2, 23) essentially at right angles to the direction of flow of the fluid (f2).

7. Apparatus as claimed in Claim 6, characterised in that the mass of bulk material (2) is an adsorption filter, in particular an active carbon filter, with a discontinuous flow of the adsorbent (2.1) from the top to the bottom and with continuous flow of the gases to be filtered in counterflow from the bottom to the top, at least one withdrawal worm (S2) projecting into the filter bed (23) in the horizontal direction.

8. Apparatus as claimed in Claim 6 or Claim 7, having an essentially rectangular plan for the bulk material filter, characterised in that the withdrawal worm (S2) protrudes into the filter bed (23) with its axis (5) parallel to the casing surfaces of the filter container.

9. Apparatus as claimed in Claim 8, characterised in that at least two withdrawal worms (S2) are arranged on a surface (3b) of the filter container (3) at different levels (z1–z5) of the bulk material filter, and so as to be laterally offset from one another.

10. Apparatus as claimed in Claim 9, characterised by an arrangement of the withdrawal worms (S2) on the container wall (3b) in such manner that, in the case of at least three withdrawal worms, each withdrawal worm is displaced both in height and also laterally in relation to the adjacent withdrawal worm and the following withdrawal worm in each case is further displaced in the same direction.

11. Apparatus as claimed in Claim 7, characterised in that the end of the worm protruding outwardly through the container wall of the bulk material filter is surrounded by a worm pipe to which the collecting device is connected; and that the collecting device (A; A1–A5) consists of a material lock having a lock pot (26) particularly in the form of an inspection glass, and shut-off elements (26a, 26b) connected upstream and downstream of said inspection glass, and a discharge pipe (27) connected to the lock and having a collecting vessel (28).

12. Apparatus as claimed in Claim 11, characterised in that the discharge pipe (27) terminates in a grooved edge ring (29) for a protective bag (28) – which preferably consists of a transparent synthetic resin – can be clamped in gas-tight manner at the edge of its opening, as collecting vessel.

13. Apparatus as claimed in Claim 9, characterised in that a plurality of discharge pipes (36) which in each case connected downstream of a withdrawal worm (S2) through cut-off elements (35), open into a common, sloping collector (37) which by means of a section (38) of inspection glass and a second cut-off element (39) opens into the protective bag (28) which can be clamped to the collector end in gas-tight manner.

14. Apparatus as claimed in Claim 13, characterised in that the discharge pipes (36) of the withdrawal worms (S2) of at least two mutually adjacent filter containers (F1, F2) are connected to the collector (37).

15. Apparatus as claimed in Claim 1, characterised in that the immersion end (8) of the withdrawal worm (S1, S2, S3) is positioned on a pivot bearing (9) which is supported by a holding rod (10) secured to the container wall (3a) of the filter (2, 3) which is opposite the worm pipe (4) so as to be in alignment with the worm axis (5).

16. Apparatus as claimed in Claim 1, characterised in that the withdrawal worm (S3) has an outer diameter $(D_s)$ which is constant over its length, but its core diameter $(r_{SA})$ increases from the beginning (1) of the worm outside the bulk material to the end (8) of the worm within the bulk material.

17. Apparatus as claimed in Claim 1 or 16, characterised in that the size of the conveying surface and the coil height (h) of the withdrawal worm (S1) decrease with increasing immersion depth (x) in accordance with a stepped curve.

18. Apparatus as claimed in Claim 6, characterised in that the mass of bulk material is an adsorption filter, in particular an active carbon filter, with discontinuous flow of the adsorption means (2.1) from the top to the bottom and with continuous flow of the gases to be filtered in cross-current or cross-counter-current through the filter bed (23), at least one withdrawal worm (S2) protruding into the filter bed (23) transverse to the direction of flow of the gas.

**Revendications**

1. Dispositif comportant un réservoir (3) pour une masse (2) d'un matériau en vrac, qui descend à travers le récipient selon un mode au moins discontinu, et comportant une amenée du matériau en vrac située du côté du couvercle du récipient et une évacuation située du côté de la base, et comportant un dispositif de prélèvement d'échantillons, qui possède une vis de prélèvement (S1, S2, S3) non entourée par une enveloppe et qui est montée dans la paroi (3b) du réservoir de manière à pénétrer dans la masse (2) de matériau en vrac par une ouverture de sortie (1), et un dispositif d'entraînement rotatif (MG, 30) ainsi qu'un dispositif de collecte (A, A1–A5, 26 à 29), dans lequel la vis de prélèvement (S1, S2, S3) entraîne, alors de sa rotation, des échantillons de matériau en vrac hors de la masse de ce matériau, caractérisé en ce que la projection en plan des filets de vis (b) sur une surface de projection supposée disposée perpendiculairement à l'axe (5) de la vis forme des surfaces d'entraînement qui diminuent au fur et à mesure que la profondeur (x) de pénétration de la vis (S1, S2, S3) dans la masse de matériau en vrac (2) augmente, de sorte que lors du prélèvement d'un échantillon dans un état quasi stationnaire de la masse de matériau en vrac (2), on obtient entre les différentes spires de la vis (g) depuis l'extrémité introduite (8) dans la direction de l'ouverture de sortie (1), et ce respectivement depuis la hauteur $(h_1, h_2, h_3 \ldots)$ du filet jusqu'à la hauteur immédiatement supérieure $(h_2, h_3, h_4 \ldots)$ du filet, une accumulation en couches, contre la première quantité partielle d'une section en forme de cylindre creux (a) du matériau en vrac, des quantités partielles d'autres sections en forme de cylindres creux (b, c, d, e, etc. . . .) du matériau en vrac qui sont représentatives de la masse de matériau en vrac (2) de la section de vis (S1–S5) considérée.

2. Dispositif suivant la revendication 1, caractérisé par le fait que la taille de la surface d'entraînement de la vis de prélèvement (S1, S2, S3) diminue de façon continue lorsque la profondeur (x) de pénétration de la vis augmente.

3. Dispositif suivant la revendication 1 ou 2, caractérisé par le fait que la vis de prélèvement (S2) comporte un contour extérieur qui se rétrécit essentiellement avec une forme conique depuis l'ouverture de sortie (1) jusqu'à son extrémité interne (8) et que le corps (5) de la vis possède une forme cylindrique ou se rétrécit également avec une forme conique en direction des extrémités internes (8), et ce avec un cône plus pointu que le contour extérieur de la vis.

4. Dispositif suivant la revendication 1 ou 2, caractérisé par le fait que la hauteur de filet (h), qui est déterminante pour la taille de la surface d'entraînement respective, c'est-à-dire la distance mesurée entre le corps (5) et le pourtour extérieur de la vis, diminue approximativement linéairement en direction de l'extrémité intérieure (8) de la vis, suivant la direction de l'axe (5) de la vis, et diminue d'une manière plus que proportionnelle dans la zone des hauteurs de filets (h) les plus faibles, notamment dans la zone au moins des trois derniers filets de vis (8g–10g).

5. Dispositif suivant la revendication 4, caractérisé par le fait que la hauteur de filet (h) de la vis (S2) est régie par une autre fonction de correction conformément à laquelle la courbe (12), qui diminue d'une manière approximativement linéaire – en commençant au niveau de la hauteur de filet maximale (h) jusqu'à la hauteur de filet minimale – est corrigée dans la zone des deux premiers filets de vis (0g, 1g) de manière à prendre des valeurs supérieures et est corrigée, dans la zone au moins du troisième et du quatrième filets de vis (2g, 3g), pour prendre des valeurs plus faibles.

6. Dispositif suivant la revendication 1, caractérisé par le fait que la masse de matériau en vrac forme un filtre constitué par un matériau en vrac et qui est traversé par des fluides devant être purifiés et comporte à cet effet, sur deux côtés réciproquement opposés du filtre, des arrivées (16) et des sorties (17) pour le fluide, et que la vis de prélèvement (S2) pénètre essentiellement perpendiculairement à la direction (f2) d'écoulement du fluide, dans le lit filtrant (2, 23).

7. Dispositif suivant la revendication 6, caractérisé par le fait que la masse de matériau en vrac (2) est un filtre d'adsorption, notamment un filtre à charbon actif dans lequel il se produit un écoulement descendant discontinu du produit adsorbant (2.1) et un écoulement continu ascendant des gaz à filtrer, à contrecourant, auquel cas au moins une vis de prélèvement (S2) pénètre suivant la direction horizontale à l'intérieur du lit filtrant (23).

8. Dispositif suivant la revendication 6 ou 7, comportant un filtre formé de matériau en vrac dont le contour en projection horizontale est essentiellement rectangulaire, caractérisé par le fait que la vis de prélèvement (S2) pénètre par son axe (5), parallèlement aux surfaces enveloppes du récipient du filtre, à l'intérieur du lit filtrant (23).

9. Dispositif suivant la revendication 8, caractérisé par le fait qu'au moins deux vis de prélèvement (S2) sont disposées sur une surface enveloppe (3b) du récipient de filtre (3) à différentes hauteurs (z1–z5) du filtre formé du matériau en vrac, mais en étant réciproquement décalées latéralement.

10. Dispositif suivant la revendication 9, caractérisé par une disposition telle des vis de prélèvement (S2) sur la paroi (3b) du récipient que, dans le cas d'au moins trois vis de prélèvement, chacune de ces dernières est décalée aussi bien en hauteur que latéralement par rapport à la vis de prélèvement voisine et que la vis de prélèvement immédiatement suivante est décalée de façon supplémentaire dans la même direction.

11. Dispositif suivant la revendication 7, caractérisé par le fait que l'extrémité de la vis, qui fait saillie vers l'extérieur à travers la paroi du récipient du filtre formé du matériau en vrac, est entourée par un tube auquel le dispositif de collecte est raccordé, et que le dispositif de collecte (A; A1–A5) est constitué par un sas comportant un pot (26) notamment du type à voyant et par des organes de blocage (26a, 26b) branchés en amont et en aval de ce pot ainsi que par un tube de sortie (27) raccordé au sas et comportant un récipient de collecte (28).

12. Dispositif suivant la revendication 11, caractérisé par le fait que le tube de sortie (27) se termine par un rebord annulaire nervuré (29) pour un sachet de protection, auquel un sachet de protection (28) formant récipient de collecte – constitué de préférence en une matière plastique transparente – peut être fixé par serrage, d'une manière étanche au gaz, par le bord de son ouverture.

13. Dispositif suivant la revendication 9, caractérisé par le fait que plusieurs tubes de sortie (36), qui sont branchés en aval de vis respectives de prélèvement (S2) par l'intermédiaire d'organes d'arrêt (36), débouchent dans un tube collecteur commun incliné (37) qui débouche, à nouveau par l'intermédiaire d'une section à voyant (38) et d'un second organe d'arrêt (39), dans le sachet de protection (28) pouvant être fixé de façon étanche par serrage à l'extrémité du tube collecteur.

14. Dispositif suivant la revendication 13, caractérisé par le fait que les tubes de sortie (36) des vis de prélèvement (S2) sont raccordés au tube collecteur (37) par au moins deux récipients de filtres (F1, F2) voisins l'un de l'autre.

15. Dispositif suivant la revendication 1, caractérisé par le fait que l'extrémité introduite (8) des vis de prélèvement (S1, S2, S3) est montée sur un palier rotatif (9) qui est porté par une barre de maintien (10) fixée, en position alignée avec l'axe (5) de la vis, à la paroi (3a) du récipient du filtre (2, 3), qui est en vis-à-vis du tube (4) entourant la vis.

16. Dispositif suivant la revendication 1, caractérisé par le fait que la vis de prélèvement (S3) possède un diamètre extérieur $(D_s)$, qui est constant sur sa longueur, tandis que le diamètre $(r_{SA})$ de son noyau augmente depuis le début (1) de la vis, qui est située à l'extérieur du matériau en vrac, jusqu'à l'extrémité (8) de la vis, qui se situe à l'intérieur du matériau en vrac.

17. Dispositif suivant la revendication 1 ou 16, caractérisé par le fait que la grandeur de la surface d'entraînement ou la hauteur de filet (h) de la vis de prélèvement (S1) diminue de façon étagée par l'intermédiaire d'une courbe en escalier, lorsque la profondeur de pénétration (x) augmente.

18. Dispositif suivant la revendication 6, caractérisé par le fait que la masse du matériau en vrac constitue un filtre d'adsorption et notamment un filtre adsorbant actif, dans lequel il se produit un écoulement descendant discontinu du produit adsorbant (2.1) et un écoulement continu des gaz filtrés, selon un mode à courants inversés ou à contre-courants inversés, à travers le lit filtrant (23), au moins une vis de prélèvement (S2) pénétrant dans le lit filtrant (23) transversalement par rapport à la direction circulation du gaz.

FIG 1

FIG 2

FIG 3

FIG 4

FIG 5

FIG 6

FIG 7

FIG 8

FIG 9